Europäisches Patentamt

European Patent Office

Office européen des brevets

(19)

(11) Veröffentlichungsnummer: **0 335 116**
**A2**

(12) ## EUROPÄISCHE PATENTANMELDUNG

(21) Anmeldenummer: 89103390.4

(22) Anmeldetag: 27.02.89

(51) Int. Cl.⁴: **G01C 21/18 , G01C 19/38**

(30) Priorität: 29.03.88 DE 3810617

(43) Veröffentlichungstag der Anmeldung:
04.10.89 Patentblatt 89/40

(84) Benannte Vertragsstaaten:
**BE CH DE ES FR GB GR IT LI NL SE**

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Renker, Horst**
**Zur Pfrille 24**
**D-7770 Überlingen-Nussdorf(DE)**
Erfinder: **Bernard, Walter, Dr.**
**Allmendweg 6**
**D-7758 Meersburg(DE)**

(74) Vertreter: **Weisse, Jürgen, Dipl.-Phys. et al**
**Bökenbusch 41 Postfach 11 03 86**
**D-5620 Velbert 11-Langenberg(DE)**

(54) **Verfahren zur Ausrichtung einer zweiachsigen Plattform.**

(57) Eine zweiachsige Plattform enthält einen um eine Azimutachse (Y) verdrehbaren Azimutrahmen (10). In dem Azimutrahmen (10) ist ein Innenrahmen (14) um eine Achse (X) gelagert. In dem Innenrahmen (14) sitzt ein zweiachsiger Kreisel (18) mit Eingangsachsen (20,24) und einer Drallachse (22). Durch einen Drehmomenterzeuger (40), der von einem Neigungsmesser (28) gesteuert ist, wird die Drallachse (22) stets horizontal gehalten. Durch die Horizontalkomponente der Erddrehgeschwindigkeit, die auf die Eingangsachse (20) des Kreisels (18) wirkt, wird die Drallachse (22) über den Drehmomenterzeuger (38) nach Nord eingedreht. Zur Eliminierung des Einflusses von Kreiseldriften einschließlich axialer Masseunwucht wird der Azimutwinkel der Drallachse (22) in einer ersten Stellung gemessen. Dann werden gleichzeitig Azimutrahmen (10) und Innenrahmen (14) um jeweils 180° um ihre Achsen (Y bzw. X) verdreht. Anschließend wird wieder der Azimutwinkel gemessen, auf welchen sich die Drallachse (22) einstellt. Die Mitte zwischen diesen Lagen liefert eine hinsichtlich Kreiseldriften kompensierte Nordanzeige. Es werden weiter Mittel beschrieben zur Bestimmung von Fehlern, welche durch Abweichungen der Azimutachse von der Vertikalen hervorgerufen werden.

EP 0 335 116 A2

Fig. 2

# Verfahren zur Ausrichtung einer zweiachsigen Plattform

## Technisches Gebiet

Die Erfindung betrifft ein Verfahren zur Ausrichtung einer zweiachsigen Plattform mit einem um eine Azimutachse verdrehbaren Azimutrahmen, einem um eine zweite Achse gegenüber dem Azimutrahmen verdrehbaren Innenrahmen und einem in dem Innenrahmen sitzenden zweiachsigen Kreisel, bei welchem die Plattform nach einer Vorausrichtung bei horizontaler Drallachse des Kreisels in eine erste Stellung verdreht wird, in welcher die Summe der an einer Eingangsachse wirksamen Drehgeschwindigkeiten null wird.

Die Erfindung betrifft auch eine Plattform zur Durchführung dieses Verfahrens.

## Zugrundeliegender Stand der Technik

Durch die DE-C2-33 37 715 ist ein Kurs-Lage-Referenzgerät bekannt, bei welchem ein zweiachsiger Lagekreisel mit einer im wesentlichen horizontalen Drallachse auf einem Innenrahmen angeordnet ist. Der Lagekreisel weist Lageabgriffe und Drehmomenterzeuger auf den Eingangsachsen auf. Der Innenrahmen ist in einem Azimutrahmen um eine im wesentlichen horizontale Rahmenachse gelagert. Der Azimutrahmen ist seinerseits um eine im wesentlichen vertikale Rahmenachse, die Azimutachse, drehbar an einer Basis gelagert. Die beiden Rahmenachsen sind zueinander senkrecht. Die Rahmenachse zwischen Innenrahmen und Azimutrahmen ist senkrecht zur Drallachse des Kreisels. Eine erste Eingangsachse des Kreisels ist parallel zu der Rahmenachse des Innenrahmens und senkrecht zur Drallachse. Die zweite Eingangsachse des Kreisels ist senkrecht zu der ersten Eingangsachse und zu der Drallachse.

Ein Neigungsmesser spricht auf Neigung des Innenrahmens gegenüber der Horizontalen um die erste Eingangsachse an.

Es ist eine Servoelektronik mit Abgriffen an dem Kreisel vorgesehen, deren Signale die Stellmotore steuern, derart, daß der Innenrahmen mit einem Kreiselgehäuse elektrisch an die Drallachse gefesselt ist. Durch einen ersten Regelkreis, dessen Meßfühler der Neigungsmesser ist, wird die Drallachse des Kreisels stets horizontal gehalten. Zu diesem Zweck steuert der Neigungsmesser einen um die zweite Eingangsachse wirksamen Drehmomenterzeuger an. Dieser bewirkt eine Auslenkung des Kreisels um die erste Eingangsachse. Der um die erste Eingangsachse wirksame Lageabgriff steuert wiederum durch die Servoelektronik den Innenrahmen so, daß die Drallachse horizontal gehalten wird.

Weiter ist ein zweiter Regelkreis vorgesehen, dessen Regelgröße das um die zweite Eingangsachse wirkende Drehmoment ist. Dieser zweite Regelkreis steuert den um die erste Eingangsachse wirksamen Drehmomenterzeuger so an, daß der Azimutrahmen über die Servoelektronik in eine Stellung verdrehbar ist, in welcher die um die erste Eingangsachse wirksame Drehgeschwindigkeit null wird.

Bei dem Kurs - Lage - Referenzgerät nach der erwähnten DE-C2-33 37 715 erfolgt bei Vorhandensein eines Winkels zwischen der Drallachse des Kreisels und Nord eine laufende Auslenkung des Lagekreisels und eine dementsprechende Neigung des Innenrahmens. Auf diese Neigung spricht der Neigungsfühler an. Das Signal des Neigungsfühlers ist auf den ersten Regelkreis, einen Ausrichtregler, geschaltet. Das Ausgangssignal dieses ersten Regelkreises ist als Stellsignal auf einen Drehmomenterzeuger des Kreisels geschaltet und bewirkt eine Auslenkung des Kreisels. Diese Auslenkung bewirkt wiederum über den entsprechenden Lageabgriff und den davon gesteuerten, im Azimut wirksamen Stellmotor eine Ausrichtung der Drallachse nach Nord.

Das im ersten Regelkreis auf den Drehmomenterzeuger gegebene Stellsignal wird im Gleichgewichtszustand gespeichert. Der im Azimut wirksame Stellmotor ist so ansteuerbar, daß der Innenrahmen anschließend im Azimut um einen festen Winkel verdreht wird. Aus dem gespeicherten und dem nach der Verdrehung erhaltenen Stellsignal wird durch einen Rechner ein Signal erzeugt, das dem dann vorhandenen Winkel zwischen Drallachse und Nord entspricht. Daraufhin wird der um die Azimutachse wirksame Stellmotor entsprechend diesem Signal so angesteuert, daß die Drallachse nach Nord ausgerichtet ist.

Bei der Anordnung nach der DE-C2 33 37 715 geht es darum, bei einem Kurs - Lage - Referenzgerät unter Ausnutzung vorhandener Bauteile eine Vorausrichtung der Drallachse des Kreisels nach Nord vorzunehmen. Es geht nicht um die Kompensation von Kreiselfehlern.

Durch die DE-B1-29 03 282 ist ein Gerät zur Bestimmung der Nordrichtung mittels eines von der Erddrehung beeinflußten Kreisels bekannt. Dieser Kreisel ist zweiachsig. Die Drallachse des Kreisels ist vertikal. An zwei zueinander und zur Drallachse senkrechten Eingangsachsen des Kreisels sind Lageabgriffe und Drehmomenterzeuger angeordnet. Das Signal jedes einer Eingangsachse zugeordneten Lageabgriffs ist auf den der jeweils anderen Achse zugeordneten Drehmomenterzeuger geschaltet, wodurch der Kreisel elektrisch mit seiner Drallachse an die Vertikale gefesselt ist. Aus den beiden Signalen, die auf die Drehmomenterzeuger geschaltet sind und die den Komponenten der Horizontalkomponente der Erddrehgeschwindigkeit entsprechen, wird durch einen Nordabweichungsrechner der Winkel zwischen einer der Eingangsachsen und der Nordrichtung berechnet.

Bei der DE-B1-29 03 282 werden die beiden Signale in einem Speicher gespeichert. Anschließend wird der Kreisel um seine Drallachse um 180° verdreht. In dieser verdrehten Lage werden wieder die den Drehmomenterzeugern zugeführten Signale gespeichert. Zur Berechnung der Nordabweichung werden dann die Summen und die Differenzen der einander entsprechenden gespeicherten Signale gebildet. Durch diese Summen- und Differenzbildung werden Kreiselfehler eliminiert.

Durch die DE-C2-30 50 615 ist eine Vorrichtung zur Bestimmung der Nordrichtung bekannt. Diese Vorrichtung enthält einen Azimutrahmen, der um eine Azimutachse verdrehbar gelagert ist. Auf dem Azimutrahmen ist ein Wendekreisel angeordnet, der auf Komponenten der Erddrehgeschwindigkeit anspricht und entsprechende Signale liefert. Die Drallachse des Wendekreisels liegt in einer zu der Azimutachse senkrechten Ebene. Eine Eingangsachse des Wendekreisels verläuft in dieser Ebene senkrecht zur Drallachse. Der Azimutrahmen ist durch einen Stellmotor in eine 0°-Stellung, eine 90°-Stellung, eine 180°-Stellung und eine 270°-Stellung verdrehbar. Die jeweils erhaltenen Signale des Wendekreisels werden gespeichert. Aus den gespeicherten Signalen wird durch einen Rechner die Nordrichtung bestimmt. Dabei werden durch Differenzbildung Kreiselfehler, die auf Kreiseldriften beruhen, kompensiert. Es wird dabei die Tatsache ausgenutzt, daß bei einer Verdrehung des Kreisels um 180° die von der Erddrehgeschwindigkeit hervorgerufenen Signale ihr Vorzeichen ändern, also sich bei der Differenzbildung addieren, während die meisten Kreiselfehler bei der Verdrehung ihr Vorzeichen beibehalten und sich daher durch die Differenzbildung herausheben.

Die EP-A1-0 048 212 beschreibt ein Kurs-Lage-Referenzgerät mit einem zweiachsigen Lagekreisel mit im wesentlichen horizontaler Drallachse auf einem Innenrahmen. Der Innenrahmen ist um eine zur ersten Eingangsachse des Lagekreisels parallele Schwenkachse drehbar in einem Azimutrahmen gelagert. Zwei Neigungssensoren sitzen auf dem Innenrahmen, zwei andere Neigungssensoren sind gehäusefest angeordnet. Ein Winkelgeber auf der Azimutachse liefert ein Azimutsignal. Durch Stellmotore, die von Abgriffen des Lagekreisels gesteuert sind, ist der Innenrahmen um zwei Achsen von den Bewegungen des Trägers entkoppelt. Die Bewegung um die dritte Achse wird durch einen ersten Neigungssensor gemessen und im Rechner berücksichtigt. Signale zur Kompensation der Vertikalkomponente der Erddrehung sind auf Drehmomenterzeuger geschaltet, die um die Eingangsachsen auf den Lagekreisel wirken. Durch Aufschalten des Signals des zweiten Neigungssensors auf die Drehmomenterzeuger auf den Eingangsachsen des Lagekreisels wird dieser zweite Neigungssensor horizontiert und die Kreiseldrallachse in die Nordrichtung eingedreht.

Die US-A-4 458 426 zeigt einen Kreiselkompaß mit einem Rahmen, der um eine aufrechte Achse drehbar ist und einem Kreisel, der in diesem Rahmen um eine quer zu der aufrechten Achse liegende innere Achse drehbar in diesem Rahmen gelagert ist. Der Kreiselkompaß enthält auch einen Neigungssensor, der auf dem Rahmen sitzt und ein Neigungssignal liefert, das der Kippung der aufrechten Achse aus der Vertikalen entspricht. Mit dem Neigungssensor ist ein Regler verbunden. Der Regler spricht auf das Neigungssignal an und dreht den Rahmen in eine Ausgangslage, in welcher das Neigungssignal null ist. Der Rahmen wird verdreht, bis der Neigungssensor anzeigt, daß die innere Achse horizontal ist. Es wird dann das Drehmoment gemessen, das auf den Kreisel durch die Horizontalkomponente der Erddrehung bei Verdrehung der Drallachse des Kreisels um die innere Achse in eine horizontalle Lage ausgeübt wird. Anschließend wird der Rahmen um 180° verdreht und erneut das Drehmoment gemessen, das auf den Kreisel durch die Horizontalkomponente der Erddrehung ausgeübt wird, wenn die Drallachse wieder um die innere Achse in eine horizontale Lage gebracht ist.

**Offenbarung der Erfindung**

Der Erfindung liegt die Aufgabe zugrunde, ein Verfahren der eingangs genannten Art zur Ausrichtung einer zweiachsigen Plattform so auszugestalten, daß eine Kompensation von Kreiselfehlern erfolgt.

Erfindungsgemäß wird diese Aufgabe gelöst durch die Verfahrensschritte:

(a) Messung des Azimutwinkels in der besagten ersten Stellung,

(b) gleichzeitige Verdrehung des Azimutrahmens und des Innenrahmens um die jeweilige Plattformachse um jeweils 180°,

(c) Verdrehung der Plattform in eine zweite Stellung, in welcher wiederum die Summe der an der besagten Eingangsachse wirksamen Drehgeschwindigkeiten null wird und

(d) Messung des Azimutwinkels in der besagten zweiten Stellung,

(e) wobei ein die Nordrichtung darstellender Winkel in der Mitte zwischen den Lagen der Drallachse in den beiden Stellungen erhalten wird.

Nach der Erfindung werden Kreiselfehler durch eine Verdrehung der Plattform eliminiert. Es gibt jedoch Kreiselfehler, beispielsweise die durch axiale Masseunwucht hervorgerufene Drift, die bei einer Verdrehung der Plattform um die Azimutachse allein nicht eliminiert werden können. Bei einer Drehung der Plattform um 180° ändern die von der Erddrehgeschwindigkeit herrührenden Signale ihr Vorzeichen, während z.B. die Biasdrift ihr Vorzeichen beibehält. Durch Differenzbildung kann daher die Biasdrift eliminiert werden. Die durch eine axiale Masseunwucht hervorgerufene Drift des Kreisels ändert jedoch bei einer solchen Drehung um die Azimutachse ihr Vorzeichen ebenfalls. Zur Eliminierung dieser Drift wäre eine Verdrehung um die Drallachse erforderlich. Eine solche Drehung für sich würde aber eine sehr aufwendige dreiachsige Plattform erfordern, da bei einer zweiachsigen Plattform der Innenrahmen nicht um die Drallachse verdrehbar ist. Deshalb wird bei dem erfindungsgemäßen Verfahren eine gleichzeitige Verdrehung des Innenrahmens um beide Achsen um jeweils 180° vorgenommen. Es läßt sich zeigen, daß dann die Drallachse wieder in ihrer alten Stellung ist aber beide Eingangsachsen des Kreisels um 180° gegenüber ihrer vorherigen Stellung verdreht sind.

Wenn in beiden Stellungen des Innenrahmens eine Einstellung so erfolgt, daß die an der ersten Eingangsachse wirksamen Drehgeschwindigkeiten null sind, kann daraus die wahre Nordrichtung unter Eliminierung der Kreiselfehler bestimmt werden.

Eine Plattform zur Durchführung des beschriebenen Verfahrens enthaltend

(a) einen Azimutrahmen, der um eine im wesentlichen vertikale Azimutachse gegenüber einer Basis verdrehbar gelagert ist,

(b) einen Innenrahmen, der um eine zur Azimutachse senkrechte, im wesentlichen waagerechte zweite Achse in dem Azimutrahmen verdrehbar gelagert ist,

(c) einen ersten Stellmotor, durch welchen der Azimutrahmen um die Azimutachse verdrehbar ist,

(d) einen zweiten Stellmotor, durch welchen der Innenrahmen um die zweite Achse verdrehbar ist,

(e) einen zweiachsigen Kreisel mit einer Drallachse, einer ersten und einer zweiten Eingangsachse, wobei die erste Eingangsachse parallel zu der besagten zweiten Achse der Plattform liegt, die Drallachse senkrecht dazu im wesentlichen waagerecht verläuft und die zweite Eingangsachse senkrecht zu Drallachse und erster Eingangsachse angeordnet ist,

(f) einen Abgriff und einen Drehmomenterzeuger auf jeder der Eingangsachsen des Kreisels,

(g) einen ersten Neigungsmesser, der auf Neigung des Innenrahmens gegenüber der Horizontalen um die erste Eingangsachse anspricht,

(h) eine Servoelektronik, durch welche ein Kreiselgehäuse elektrisch der Drallachse um zwei Achsen nachgeführt wird,

(i) einen ersten Regelkreis, dessen Meßfühler der erste Neigungsmesser und dessen Stellglied der um die zweite Eingangsachse wirkende Drehmomenterzeuger ist und durch welchen die Drallachse des Kreisel stets horizontal gehalten wird, und

(j) einen zweiten Regelkreis mit einem Regler, welcher von einem der Drehgeschwindigkeit um die erste Eingangsachse entsprechenden Signal beaufschlagt ist und durch welchen der um die erste Eingangsachse wirksame Drehmomenterzeuger ansteuerbar ist, derart, daß der Azimutrahmen in eine erste Stellung verdrehbar ist, in welcher die um die erste Eingangsachse wirksame Drehgeschwindigkeit null wird, ist erfindungsgemäß dadurch gekennzeichnet, daß

(k) eine Steuervorrichtung vorgesehen ist,

(k₁) durch welche die beiden Drehmomenterzeuger derart ansteuerbar sind, daß sie eine 180°-Drehung der Drallachse des Kreisels sowohl um die erste Eingangsachse als auch um die zweite Eingangsachse einleiten,

(k₂) durch welche dann die zweite Regelkreis zur erneuten Eindrehung der Drallachse des Kreisels in eine zweite Stellung, ebenfalls mit horizontaler Drallachse ansteuerbar sind, in welcher wiederum die um die erste Eingangsachse des Kreisels wirksame Winkelgeschwindigkeit null wird,

(k₃) wobei die Mitte der Lagen der Drallachse in der ersten und der zweiten Stellung einen die Nordrichtung unbeeinflußt von Kreiseldriften wiedergebenden Azimutwinkel liefert.

Ausgestaltungen der Erfindung sind Gegenstand der Unteransprüche.

Solche Ausgestaltungen beziehen sich insbesondere auch auf die Eliminierung von Fehlern, die dadurch entstehen, daß die Azimutachse nicht genau vertikal angeordnet ist. Durch die Messung in zwei Stellungen mit zwischenzeitlichem 180°-Umschlag beider Rahmen werden vier Beziehungen zwischen bekannten und vier unbekannten Größen, darunter dem neigungsbedingten Ausrichtfehler, gewonnen, welche eine Berechnung und Korrektur dieses neigungsbedingten Ausrichtfehlers gestatten.

Ein Ausführungsbeispiel der Erfindung ist nachstehend unter Bezugnahme auf die zugehörigen Zeichnungen näher erläutert.

## Kurze Beschreibung der Zeichnungen

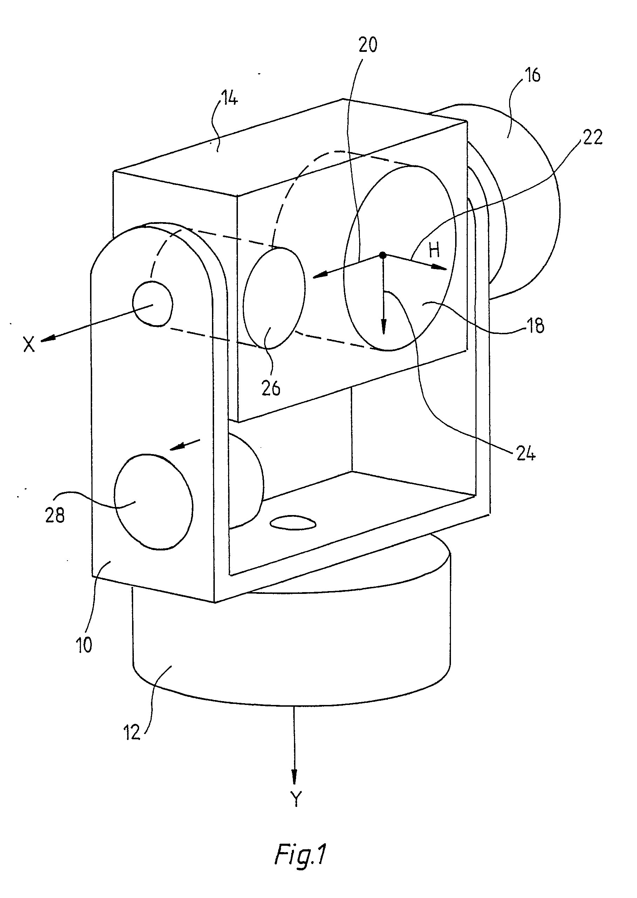

Fig.1 ist eine schematisch - perspektivische Darstellung einer Plattform mit zweiachsigem Kreisel und Neigungsmessern.

Fig.2 ist ein Blockdiagramm und zeigt Servo- und Regelkreise der Plattform.

Fig.3 bis 7 sind schematisch - perspektivische Darstellungen und zeigen die Bewegung der Drallachse und der beiden Eingangsachsen des Kreisels bei einem doppelten Rahmenumschlag der Plattform.

Fig.8 ist eine schematisch - perspektivische Darstellung der Drallachse und der Eingangsachse des Kreisels unter Berücksichtigung von Neigung und Kreiselfehlern in der ersten Stellung.

Fig.9 ist eine Draufsicht auf Fig.8.

Fig.10 ist eine schematisch - perspektivische Darstellung ähnlich Fig.8 in der zweiten Stellung des Kreisels.

## Bevorzugte Ausführung der Erfindung

Mit 10 ist ein Azimutrahmen bezeichnet. Der Azimutrahmen 10 ist mittels eines Stellmotors 12 um eine Azimutachse Y verdrehbar. In dem Azimutrahmen 10 ist ein Innenrahmen 14 um eine Achse X drehbar gelagert. Die Achse X verläuft senkrecht zu der Azimutachse Y. Der Innenrahmen 14 ist durch einen Stellmotor 16 verdrehbar. In dem Innenrahmen 14 sitzt ein zweiachsiger Kreisel 18. Eine erste Eingangsachse 20 des Kreisels 18 ist parallel zu der Achse X. Die Drallachse 22 des Kreisels 18 ist senkrecht zu der ersten Eingangsachse 20 und liegt im wesentlichen horizontal. Eine zweite Eingangsachse 24 des Kreisels 18 liegt senkrecht zu der ersten Eingangsachse 20 und der Drallachse 22 und ist somit im wesentlichen vertikal und parallel zu der Azimutachse Y.

In dem Innenrahmen sitzt ein erster Neigungsmesser 26 in Form eines Beschleunigungsmessers. Der erste Neigungsmesser 26 spricht auf die Neigung des Innenrahmens 14 gegenüber der Horizontalen um die Achse X an. In dem Azimutrahmen 10 sitzt ein zweiter Neigungsmesser 28 in Form eines Beschleunigungsmessers. Die Empfindlichkeitsachse dieses Beschleunigungsmessers ist parallel zu der Achse X. Der Neigungsmesser 28 spricht daher auf die Neigung der Achse X gegenüber der Horizontalen an.

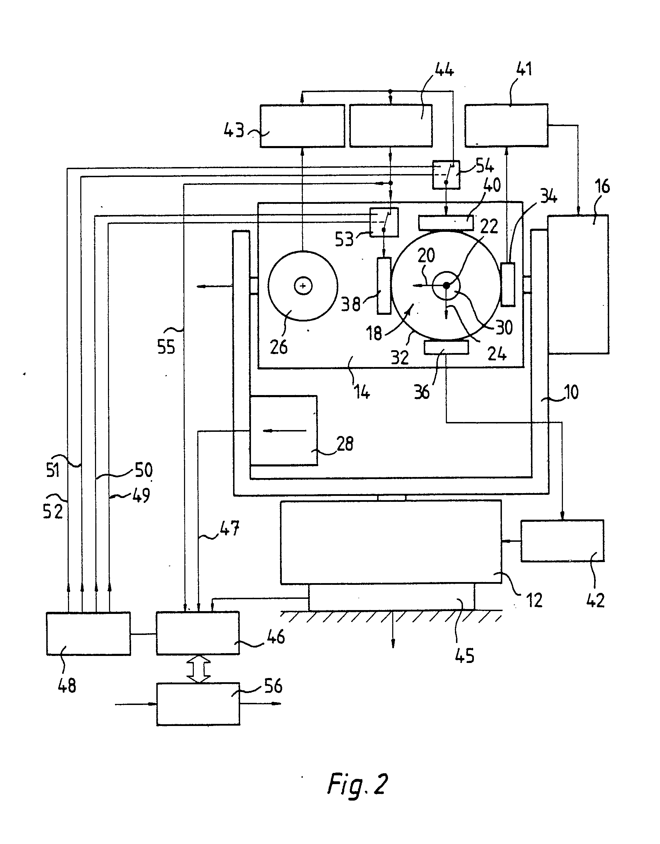

In Fig.2 ist diese Anordnung noch einmal schematisch dargestellt. Die Lage des Kreiselrotors 30 des Kreisels 18 relativ zu einem am Innenrahmen 14 festen Kreiselgehäuse 32 wird durch Abgriffe 34 und 36 abgegriffen. Der Abgriff 34 greift dabei die Auslenkung des Kreiselrotors 30 um die erste Eingangsachse 20 ab. Der Abgriff 36 greift die Auslenkung des Kreiselrotors 30 um die zweite Eingangs achse 24 ab. Es sind weiterhin Drehmomenterzeuger 38 und 40 vorgesehen, durch welche auf den Kreiselrotor 30 Drehmomente um die erste bzw. zweite Eingangsachse 20 bzw. 24 ausgeübt werden können.

Eine Servoelektronik enthält einen ersten Regler 41 und einen zweiten Regler 42. Das Signal des Abgriffs 34 ist auf den Regler 41 geschaltet. Der Ausgang des Reglers 41 ist auf den Servomotor 16 geschaltet. Wenn durch eine Drehgeschwindigkeit um die Eingangsachse 20 der Innenrahmen 14 und damit das Kreiselgehäuse 32 gegenüber dem Kreiselrotor 30 ausgelenkt wird, dann liefert der Abgriff 34 ein Signal und steuert über den ersten Regler 41 den Stellmotor 16 an. Dadurch wird der Innenrahmen 14 und damit das Kreiselgehäuse 32 gegenüber dem Azimutrahmen um die erste Eingangsachse 20 verdreht. Das Kreiselgehäuse 32 wird wieder nach dem Kreiselrotor 30 ausgerichtet und die Auslenkung kompensiert. Das Signal des Abgriffs 36 ist auf den Regler 42 geschaltet. Der Ausgang des Reglers 42 ist auf den Stellmotor 12 geschaltet. Wenn der Azimutrahmen durch eine Drehgeschwindigkeit gegenüber dem Kreiselrotor 30 um die zweite Eingangsachse 24 ausgelenkt wird, dann liefert der Abgriff 36 ein Signal und steuert über den zweiten Regler 42 den Stellmotor 12 an. Dadurch wird der Azimutrahmen und damit das Kreiselgehäuse 32 gegenüber einer Basis um die Azimutachse verdreht und damit um die zu der Azimutachse parallele zweite Eingangsachse 24. Auch hierdurch wird das Kreiselgehäuse 32 wieder nach dem Kreiselrotor 30 ausgerichtet und die Auslenkung kompensiert.

Es ist ein Regelkreis vorgesehen, durch welchen die Drallachse 22 des Kreisels 18 ständig horizontal gehalten wird. Dieser Regelkreis enthält als Meßfühler den Neigungsmesser 26, der auf die Neigung des Innenrahmens 14 gegenüber der Horizontalen anspricht. Da der Innenrahmen 14 dem Kreiselrotor 30 ständig nachgeführt wird, ist diese Neigung gleich der Neigung der Drallachse gegenüber der Horizontalen. Das Signal des Neigungsfühlers 26 ist über einen Regler 43 auf den um die zweite Eingangsachse 24 wirksamen Drehmomenterzeuger 40 geschaltet. Dadurch wird ein Drehmoment auf den Kreiselrotor 30 um die zweite Eingangsachse 24 erzeugt. Dieses Drehmoment bewirkt eine Päzession des Kreiselrotors 30 um die erste Eingangsachse 20, bis die Drallachse 22 horizontal ist. Der Innenrahmen 14 wird, wie beschrieben, dem Kreiselrotor 30 nachgeführt, so daß bei horizontaler Drallachse 22 auch das Signal des Neigungsmessers 26 verschwindet.

An der Eingangsachse 20 wirkt eine Komponente der Erddrehgeschwindigkeit. Diese Komponente versucht eine Auslenkung der Drallachse 22 um die erste Eingangsachse 20. Solche Auslenkungen werden aber durch den soeben beschriebenen Regelkreis mit dem Neigungsmesser 26, dem Regler 43 und dem Drehmomenterzeuger 40 herausgeregelt. Hierzu ist ein bestimmtes Signal an dem Drehmomenterzeuger 40 erforderlich, bei welchem das von dem Drehmomenterzeuger 40 ausgeübte Drehmoment dem Einfluß der um die erste Eingangsachse 20 wirksamen Komponente der Erddrehgeschwindigkeit die Waage hält. Dieses Signal ist der besagten Komponente proportional. Ein dem Signal am Drehmomenterzeuger 40 proportionales Signal ist, wie in Fig.2 dargestellt, auf einen zweiten Regler 44 geschaltet. Das Ausgangssignal des zweiten Reglers 44 ist auf den um die erste Eingangsachse 20 wirksamen Drehmomenterzeuger 38 geschaltet. Das Drehmoment des Drehmomenterzeugers 38 erzeugt eine Präzession des Kreiselrotors 30 um die zweite Eingangsachse 24. Die Drallachse 22 wird dabei durch den beschriebenen Regelkreis mit dem Regler 43 laufend horizontal gehalten. Durch die Regler 42 wird das Kreiselgehäuse 32 dem präzedierenden Kreiselrotor 30 um die zweite Eingangsachse 24 nachgeführt. Die Präzession des Kreiselrotors 30 bewirkt eine Drehung des Kreisels 18 in die Ost- oder Westrichtung, wobei die um die Eingangsachse 20 wirksame Komponente der Erddrehgeschwindigkeit umso kleiner wird, je weiter sich die Eingangsachse 20 der Ost- oder Westrichtung nähert. Wenn die Eingangsachse 20 nach Ost oder West gerichtet ist, wird die in die Richtung der Eingangsachse 20 fallende Komponente der Erddrehgeschwindigkeit null. Dann zeigt die Drallachse 22 nach Nord oder Süd.

Das sind idealisierte Verhältnisse. Es ist dabei angenommen, daß die Azimutachse genau vertikal ist, so daß die Vertikalkomponente der Erddrehgeschwindigkeit nicht an der Eingangsachse 20 wirksam wird. Es sind weiterhin die Kreiseldriften nicht berücksichtigt. In der Praxis sind diese idealisierten Verhältnisse nicht gegeben. Die Drallachse 22 des Kreisels wird sich daher in eine Stellung einstellen, in welcher zwar die Summe der um die erste Eingangsachse wirksamen Drehgeschwindigkeiten null wird, welche aber von der Nordrichtung abweicht.

Bei der Anordnung nach Fig.2 ist ein Winkelgeber 45 vorgesehen, der die Stellung des Azimutrahmens 10 abgreift und ein entsprechendes Signal liefert.

An einem Speicher 46 liegt über eine Leitung 47 das Signal des Neigungsmessers 28, der die Neigung der Achse X gegenüber der Horizontalen mißt. Der Speicher 46 wird durch eine Steuervorrichtung 48 zur Übernahme von Signalen angesteuert.

Durch die Steuervorrichtung 48 sind auch die Drehmomenterzeuger 38 und 40 ansteuerbar, wie durch Leitungen 49,50 bzw. 51,52 und über die Leitungen 49 bzw. 51 gesteuerte Umschalter 53 und 54 angedeutet ist. Diese Ansteuerung erfolgt so, daß gleichzeitig eine Verdrehung des Azimutrahmens 10 um 180° um die Azimutachse Y und eine Verdrehung des Innenrahmens 14 um 180° gegenüber dem Azimutrahmen 10 um die Achse X erfolgt. Die Signale des Winkelgebers 43 und des Neigungsmessers 26 können dabei als Stellungsrückführung dienen. Eine andere Möglichkeit besteht darin, jeweils einen bestimmten Steuerstrom für eine bestimmte Zeit auf die Drehmomenterzeuger 38 und 40 aufzuschalten. Der Strom fließt dabei über die Leitungen 50 und 52, während die Dauer des Stromes durch Signale auf den Leitungen 49 und 51 bestimmt wird. Vor und nach diesem Rahmenumschlag erfolgt in der beschriebenen Weise eine Einstellung der Drallachse 22 des Kreisels 18 und damit der Plattform in eine Stellung (im Idealfall die Nordrichtung), in welcher die Summe der an der ersten Eingangsachse 20 wirksamen Drehgeschwindigkeiten null wird. Dabei wird sich der Kreisel 18 und die Plattform im allgemeinen in verschiedene Stellungen, eine erste Stellung und eine zweite Stellung einstellen. Die Steuervorrichtung 47 bewirkt die Speicherung der Signale des Reglers 44, die der Drehgeschwindigkeit um die zweite Eingangsachse 24 proportional und über eine Leitung 55 auf den Speicher 46 aufgeschaltet sind, sowie der Signale des Neigungsmessers 28 in diesen beiden Stellungen. Die gespeicherten Signale sind, wie angedeutet, auf Signalverarbeitungsmittel 56 aufgeschaltet.

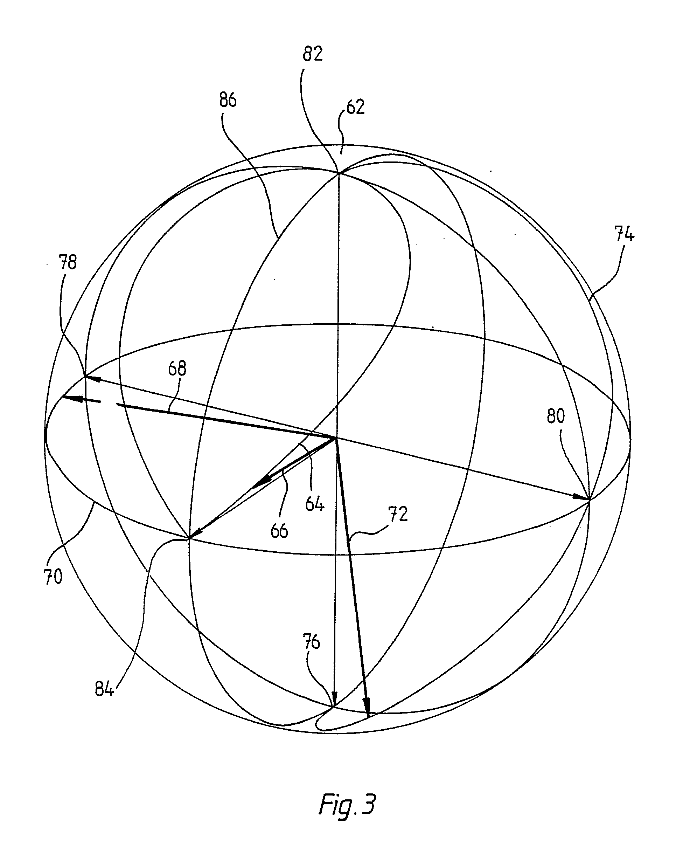

Die Figuren 3 bis 7 veranschaulichen den "doppelten Rahmenumschlag" anhand der Bahnen, die von

6

den Enden der in Richtung der Drallachse 22 und der beiden Eingangsachsen 20 und 24 weisenden Einheitsvektoren auf einer Kugelfläche 62 beschrieben werden und der dabei von diesen Einheitsvektoren eingenommenen Zwischenstellungen. Mit 64 ist die Bahn des in Richtung der Drallachse 22 weisenden Einheitsvektors 66 bezeichnet. Der in Richtung der ersten Eingangsachse 20 weisende Einheitsvektor 68 beschreibt eine Bahn 70. Der in Richtung der zweiten Eingangsachse 24 weisende Einheitsvektor 72 beschreibt eine Bahn 74. Betrachtet man den Ausgangspunkt 76 des Einheitsvektors 72, also den Durchstoßpunkt der zweiten Eingangsachse 24 durch die Kugel vor dem Umschlag, als "Südpol" der Kugel 62, dann verläuft die Bahn 70 längs des halben "Äquators" von einem "Westpunkt" 78 zu einem "Ostpunkt" 80. Der Westpunkt 78 ist dabei der Ausgangs punkt des Einheitsvektors 68, also der Durchstoßpunkt der ersten Eingangsachse 20 durch die Kugel 62 vor dem Umschlag. Die Bahn 74 verläuft spiralig von dem "Südpol" 76 durch den "Ostpunkt" 80 zum "Nordpol" 82, also zu dem Punkt, der dem "Südpol" 76 diametral gegenüberliegt. Die Bahn 64 des in Richtung der Drallachse 22 weisenden Einheitsvektors 66 ist eine blattförmige Kurve. Sie geht aus von einem auf halbem Wege zwischen Westpunkt 78 und Ostpunkt 80 auf dem "Äquator" liegenden Punkt 84, geht durch den "Nordpol" 82 und kehrt dann symmetrisch zu einem durch den "Norpol" 82 und den Punkt 84 verlaufenden "90°-Meridian" 86 wieder zu dem Punkt 84 zurück.

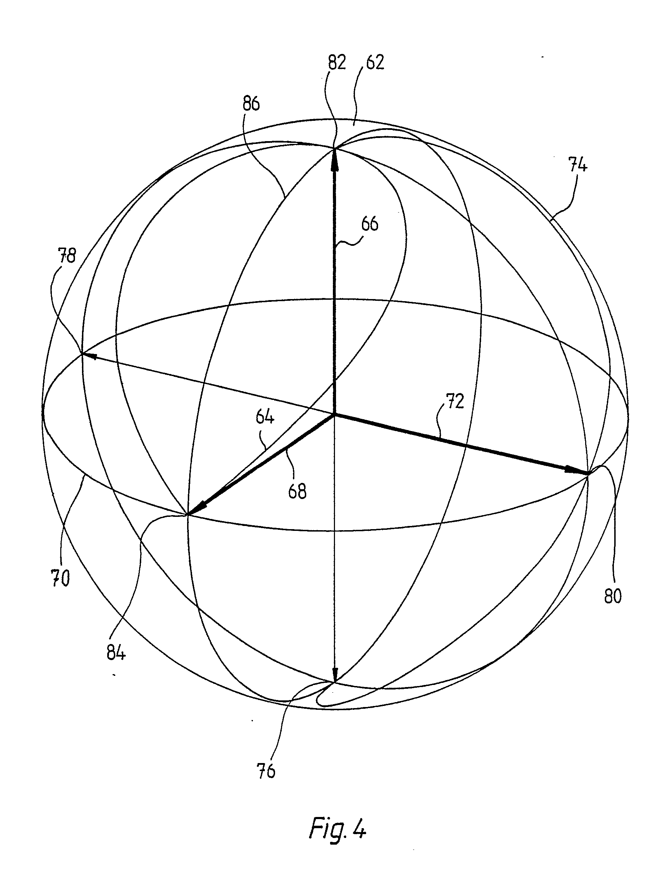

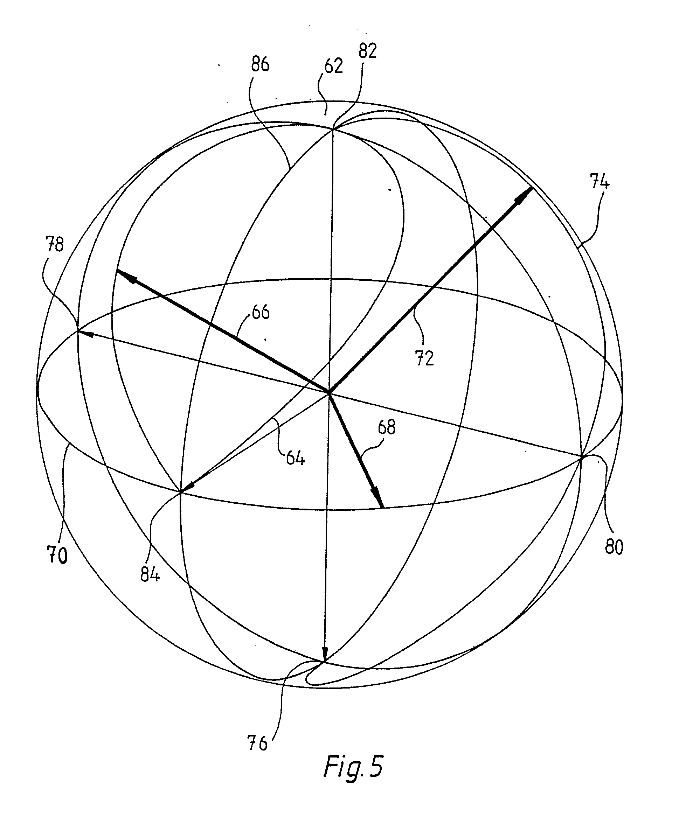

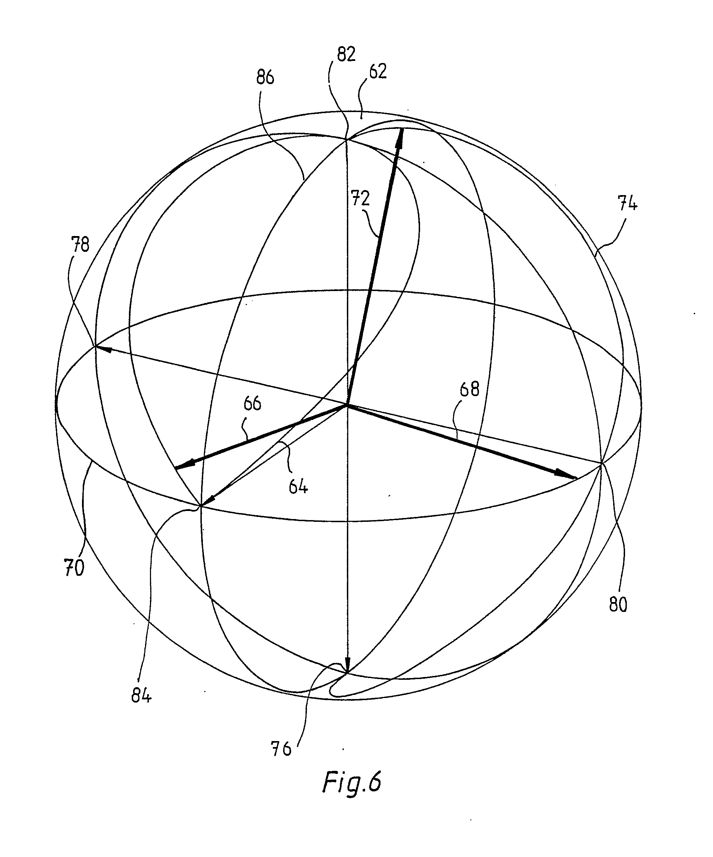

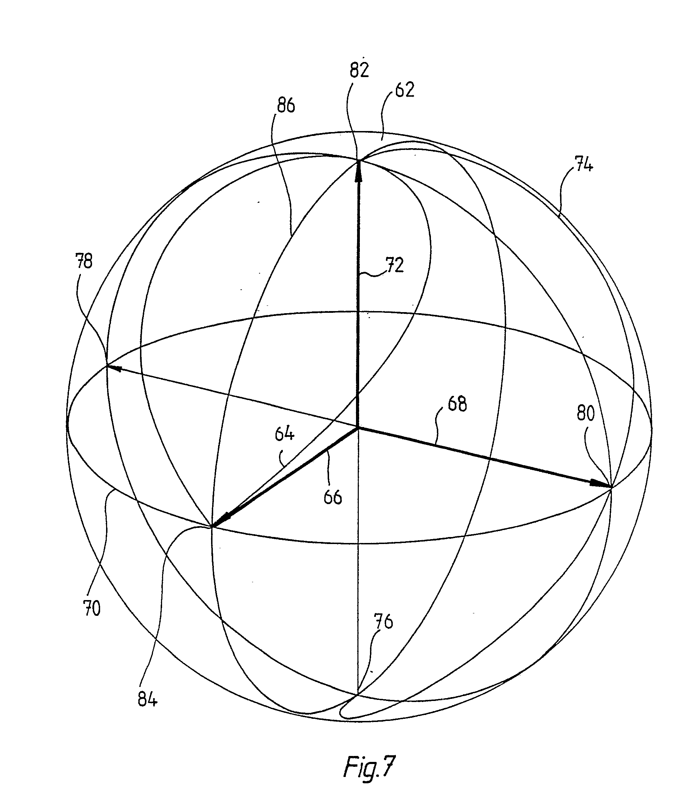

In allen Figuren sind die Ausgangslagen der drei Einheitsvektoren 66,68,72 bzw. die Lagen der Drallachse 22 und der beiden Eingangsachsen vor dem Umschlag als Referenz dargestellt. Fig.3 zeigt die drei Einheitsvektoren 66,68 und 72, die natürlich orthogonal bleiben, in der Anfangsphase des Umschlags. Fig.4 zeigt die Mittelstellung: Der Einheitsvektor 68, entsprechend der ersten Eingangsachse 20 und der Achse X, hat sich nach einer 90°-Drehung des Stellmotors 12 längs des "Äquators" bis zum Punkt 84 bewegt. Die Drallachse 22 und der Einheitsvektor 66 zeigen nach einer gleichzeitigen 90°-Drehung des Stellmotors 16 zum "Nordpol" 82. Der Einheitsvektor 72, der die zweite Eingangsachse 24 repräsentiert, steht senkrecht auf den Einheitsvektoren 66 und 68 und zeigt daher zum "Ostpunkt" 80. Fig.5 zeigt eine weitere Zwischenstellung: Der Einheitsvektor 68 hat sich längs des "Äquators" weiterbewegt und liegt zwischen Punkt 84 und "Ostpunkt" 80. Der Einheitsvektor 66, der die Drallachse 22 repräsentiert, bewegt sich vom "Nordpol" 82 auf der zweiten Hälfte der Bahn 64 wieder in Richtung auf seine Ausgangslage, also in Richtung auf den Punkt 84. Der Einheitsvektor 72, der die zweite Eingangsachse 24 repräsentiert, bewegt sich vom "Ostpunkt" 80 in Richtung auf den "Nordpol" 82. Fig 6 zeigt die Situation kurz vor Erreichen der Endstellung, also der nach dem Umschlag erreichten "zweiten Stellung": Der Einheitsvektor 68 nähert sich seiner Ausgangslage im Punkt 84. Der Einheitsvektor 68 nähert sich dem "Ostpunkt" 80, also einer der Ausgangslage diametral gegenüberliegenden Lage. Der Einheitsvektor 72 nähert sich dem "Nordpol" 82, also ebenfalls einer seiner Ausgangslage diametral gegenüberliegenden Lage. Fig.7 schließlich stellt die Endlage in der "zweiten Stellung" der Plattform nach dem doppelten Umschlag dar.

Das Endergebnis ist somit das gleiche, wie es mit einer direkten Verdrehung des Kreisels 18 um die Drallachse 22 erreicht worden wäre. Eine solche direkte Verdrehung ist aber mit einer zweiachsigen Plattform nicht möglich.

Die Verdrehung effektiv um die Drallachse ermöglicht es, Kreiseldrift zu kompensieren, die durch axiale Masseunwucht des Kreiselrotors hervorgerufen wird. Bei einer Verdrehung des Kreisels 18 um die Drallachse 22 kommt die erste Eingangsachse 20 in eine zur Ausgangslage um 180° winkelversetzte Lage. Das gleiche ist der Fall bei einem doppelten Umschlag der beschriebenen Art. Das Vorzeichen der von der ersten Eingangsachse erfaßten Komponente der Horizontalkomponente der Erddrehgeschwindigkeit kehrt sich dabei um. Sowohl bei einer direkten Verdrehung des Kreisels um die Drallachse, die eine dreiachsige Plattform voraussetzt, als auch bei dem doppelten Umschlag ist die Endlage der Drallachse einschließlich der Richtung des Drallvektors gleich der Ausgangslage. Das Vorzeichen einer durch axiale Masseunwucht bedingten Drift bleibt daher in der ersten wie in der zweiten Stellung das gleiche. Durch Differenzbildung kann daher der Einfluß einer solchen durch Masseunwucht bedingten Drift eliminiert werden. Wenn eine Nachdrehung des Azimutrahmens gemäß Fig.2 erfolgt, bis die an der ersten Eingangsachse 20 auftretende resultierende Drehgeschwindigkeit verschwindet, dann bewirken die Kreiseldriften eine Abweichung der Drallachse 22 von der Nordrichtung in diesem nachgedrehten Zustand. Diese Abweichung ist bei der ersten Stellung der Plattform entgegengesetzt gleich der Abweichung, die in der zweiten Stellung der Plattform nach dem Umschlag auftritt. Die Nordrichtung liegt daher bei genau vertikaler Azimutachse in der Mitte zwischen den beiden Lagen der Drallachse 22 bei der ersten und der zweiten Stellung der Plattform.

Das ist anders als bei einer 180°-Drehung allein um die Azimutachse. Bei einer solchen 180°-Drehung wird zwar die erste Eingangsachse 20 um 180° gedreht, so daß sich die Vorzeichen der erfaßten Drehgeschwindigkeits - Komponenten umkehren. Es wird aber auch die Richtung des Drallvektors des Kreisels und die Lage des Schwerpunktes des Kreiselrotors 30 zum Schnittpunkt der Eingangsachsen 20 und 24 umgekehrt, so daß auch das Vorzeichen der durch axiale Masseunwucht bedingten Kreiseldrift geändert wird. Daher kann mit einer solchen Drehung allein und einer Differenzbildung der Einfluß dieser Kreiseldrift nicht eliminiert werden.

Die Biasdrift des Kreisels behält ebenfalls bei dem doppelten Umschlag ihr Vorzeichen bei. Sie kann daher in gleicher Weise wie die durch axiale Masseunwucht bedingte Drift durch Kombination der Messungen in der ersten und der zweiten Stellung berücksichtigt werden. Wenn die Azimutachse genau vertikal liegt, dann liefert die Mitte zwischen der ersten und der zweiten Stellung der Drallachse 22 genau die Nordrichtung.

Eine weitere Fehlerquelle für die Bestimmung der Nordrichtung ergibt sich jedoch daraus, daß in vielen Fällen die Azimutachse Y nicht genau vertikal ausgerichtet ist. Es wird dann an der ersten Eingangsachse 20 außer einer Komponente der Horizontalkomponente der Erddrehgeschwindigkeit auch eine Komponente der Vertikalkomponente der Erddrehgeschwindigkeit wirksam. Der Kreisel stellt sich dann mit seiner Drallachse so ein, daß an der ersten Eingangsachse 20 die Summe der Komponenten von Horizontal - und Vertikalkomponente der Erddrehgeschwindigkeit null wird. Die Drallachse 22 oder die Mitte der beiden Stellungen der Drallachse zeigt dann nicht genau in die Nordrichtung.

Benutzt man jedoch zusätzlich die Neigungswinkel $\delta_1$ und $\delta_2$, die in der ersten und der zweiten Stellung der Plattform durch den Neigungsmesser 28 gemessen werden, und die in der ersten und der zweiten Stellung um die zweite Eingangsachse gemessenen Drehgeschwindigkeiten, dann kann man aus diesen Größen den Winkel berechnen, um den die Mitte der beiden Lagen der Drallachse 22 in den beiden Stellungen der Plattform von der Nordrichtung abweicht. Die Berechnung dieses Winkels $\psi$ geschieht durch die Signalverarbeitungsmittel 60.

Der Zusammenhang zwischen diesem Winkel $\psi$ und den beiden um die zweite Eingangsachse gemessenen Drehgeschwindigkeiten $\omega_{y1}$ und $\omega_{y2}$ sowie den Neigungswinkeln der Achse X in den beiden Stellungen der Plattform $\delta_1$ und $\delta_2$ ergibt sich aus der folgenden Betrachtung, die auf die Figuren 7 bis 10 Bezug nimmt.

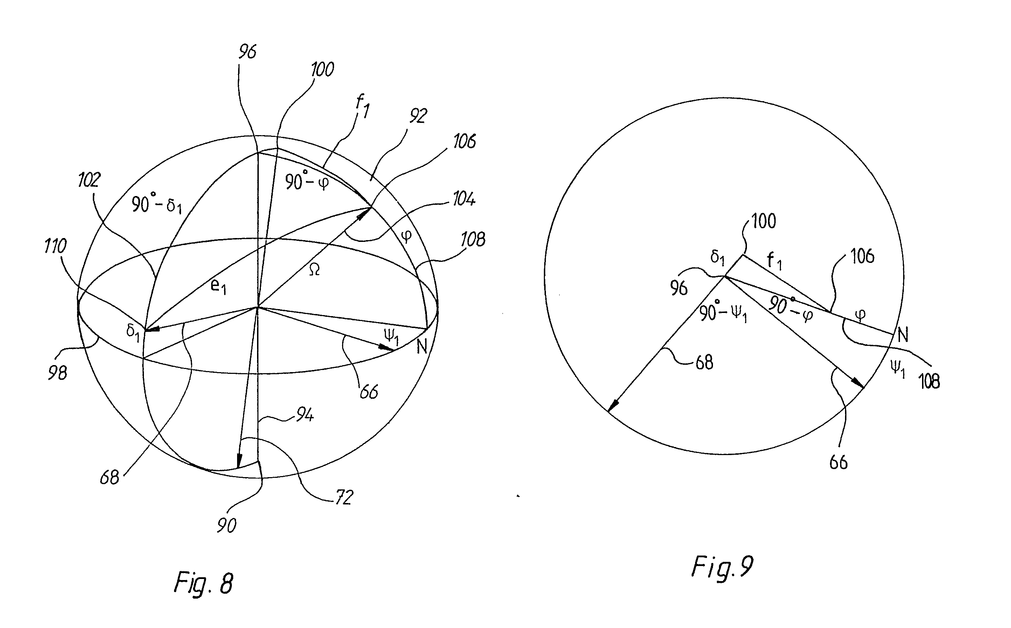

In Fig.8 ist die Lage der Achsen und Vektoren in der ersten Stellung wieder auf einer Kugel ähnlich Fig.3 bis 7 dargestellt.

Mit 90 ist der "Südpol" der Kugel 92 bezeichnet, wobei dieser "Südpol" durch die Vertikale 94 definiert ist, von welcher im allgemeinen Fall die Eingangsachse 24, dargestellt durch den Einheitsvektor 72, abweicht. Entsprechend weicht die rückwärtige Verlängerung des Einheitsvektors 72 von dem durch die Vertikale definierten "Nordpol" 96 ab. Der "Äquator" 98 der Kugel 92 repräsentiert die Horizontale. Der die erste Eingangsachse 20 repräsentierende Einheitsvektor 68 bildet in der ersten Stellung der Plattform mit der Horizontalen einen Winkel $\delta_1$. Um den gleichen Winkel ist die rückwärtige Verlängerung des Einheitsvektors 72 die in einem Punkt 100 durch die Kugel 92 stößt, gegenüber dem "Nordpol" 96 versetzt. Mit 102 ist ein "Meridian" bezeichnet, der durch den Endpunkt des Einheitsvektors 68 verläuft. Die Nordrichtung ist mit N bezeichnet. Die Drallachse 22, repräsentiert durch den Einheitsvektor 66, weicht von der Nordrichtung N ab, ist aber durch die beschriebene Regelung horizontal. Die Richtung des Vektors der Erddrehgeschwindigkeit $\Omega$ ist durch einen Einheitsvektor 104 dargestellt. Die Spitze des Einheitsvektors 104 liegt im Punkt 106 Durch die Nordrichtung N geht ein "Meridian" 108. Der Vektor der Erddrehgeschwindigkeit ist parallel zur Erdachse. Er liegt daher in der Meridianebene nach Nord und bildet mit der Horizontalen einen Winkel $\phi$, wobei $\phi$ die geographische Breite ist. Diesen Winkel 98 bildet auch der Einheitsvektor 104 mit der Äquatorebene der Kugel 92.

Um jede Eingangsachse 20 und 24 wirkt eine Komponente $\omega_{ex}$ bzw. $\omega_{ey}$ der Erddrehgeschwindigkeit $\Omega$, eine Komponente $\omega_{mx}$ bzw. $\omega_{my}$ der durch die axiale Masseunwucht $\omega_M$ bedingten Drift und eine konstante Biasdrift $\omega_{bx}$ bzw. $\omega_{by}$. Es gilt also, wenn durch den weiteren Index "1" die Größen für die erste Stellung der Plattform gekennzeichnet sind,

$$(1) \quad \omega_{x1} = \omega_{ex1} + \omega_{mx1} + \omega_{bx} = \Omega \cos e_1 + \omega_M \sin \delta_1 + \omega_{bx}$$

$$(2) \quad -\omega_{y1} = \omega_{ey1} + \omega_{my1} - \omega_{by} = \Omega \cos f_1 + \omega_M \cos \delta_1 - \omega_{by}$$

Darin ist $e_1$ der Winkel zwischen dem die Erddrehgeschwindigkeit darstellenden Einheitsvektor 104 und dem die erste Eingangsachse 20 darstellenden Einheitsvektor 68 und $f_1$ der Winkel zwischen dem Einheitsvektor 104 und der rückwärtigen Verlängerung des Einheitsvektors 72 oder der zweiten Eingangs-

achse 24.

Der Winkel $e_1$ ist eine Seite eines Kugeldreiecks, dessen Ecken von dem Nordpol 96, dem Punkt 106 und dem Endpunkt 110 des Vektors 68 gebildet sind. Die beiden anderen Seiten dieses Dreiecks sind $90° - \delta_1$ und $90° - \phi$. Der von diesen Seiten eingeschlossene Winkel ist $90° + \psi_1$. Nach dem Kosinussatz der sphärischen Geometrie ist

$$(3) \quad \cos e_1 = \sin\varphi \sin\delta_1 - \cos\varphi \cos\delta_1 \sin\psi_1$$

In ähnlicher Weise ergibt sich die Seite $f_1$ des Kugeldreiecks, das von dem Nordpol 96, dem Durchstoßpunkt 100 der rückwärtigen Verlängerung derersten Eingangsachse 20 durch die Kugel 92 und dem Punkt 106 gebildet ist. In diesem Kugeldreieck ist eine Seite $90° - \phi$, eine Seite ist $\delta_1$ und der eingeschlossene Winkel ist $90° - \psi_1$. Der Kosinussatz der sphärischen Trigonometrie liefert dann

$$(4) \quad \cos f_1 = \sin\varphi \cos\delta_1 + \cos\varphi \sin\delta_1 \sin\psi_1$$

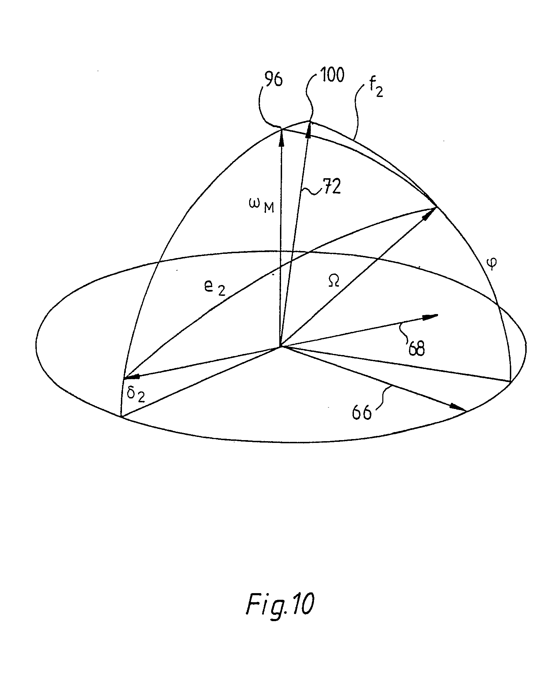

Auf ähnliche Weise ergibt sich, wie aus Fig.10 ableitbar ist, für die zweite Stellung:

$$(5) \quad -\omega_{x2} = \Omega \cos e_2 + \omega_M \sin\delta_2 - \omega_{bx}$$

$$(6) \quad \omega_{y2} = \Omega \cos f_2 + \omega_M \cos\delta_2 + \omega_{by}$$

$$(7) \quad \cos e_2 = \sin\varphi \sin\delta_2 - \cos\varphi \cos\delta_2 \sin\psi_2$$

$$(8) \quad \cos f_2 = \sin\varphi \cos\delta_2 + \cos\varphi \sin\delta_2 \sin\psi_2$$

Mit den Gleichungen (1),(2),(5) und (6) stehen vier Gleichungen zur Verfügung zur Ermittlung der vier unbekannten Größen $\omega_M$, $\omega_{bx}$, $\omega_{by}$ und $\psi$, wobei

$$(9) \quad \psi = \frac{\psi_1 + \psi_2}{2}$$

die Abweichung der Mitte der beiden in der ersten und der zweiten Stellung der Plattform ermittelten Lagen der Drallachse von der Nordrichtung ist. Es ergibt sich für diese Abweichung

$$(10) \quad \Psi = \text{arc } \sin \frac{(\omega_{y2} - \omega_{y1}) \sin \frac{\delta_1 + \delta_2}{2}}{\Omega \cos \varphi}$$

Man sieht, daß diese Abweichung bei genau vertikaler Azimutachse verschwindet. Dann sind $\delta_1$ und $\delta_2$ null und $\omega_{y2} = \omega_{y1}$. Dann liefert die Mitte zwischen den beiden Lagen der Drallachse unmittelbar die Nordrichtung.

Die beschriebene Bestimmung des Winkels $\psi$ erfolgt durch die Signalverarbeitungsmittel 60. Die Steuervorrichtung 54 leitet anschließend in der beschriebenen Weise über die Ansteuerung des Drehmomenterzeuger 38 eine Verdrehung des Azimutrahmens 10 durch den Stellmotor 12 unter Berücksichtigung des von den Signalverarbeitungsmitteln bestimmten Winkels $\psi$ ein, derart, daß die Drallachse 22 des Kreisels 18 in die Nordrichtung ausgerichtet wird.

Bei bekannten Verfahren, bei denen nur eine Verdrehung um die Azimutachse stattfindet ergeben sich für die vier unbekannten Größen nur zwei Gleichungen.

## Ansprüche

1. Verfahren zur Ausrichtung einer zweiachsigen Plattform mit einem um eine Azimutachse (Y) verdrehbaren Azimutrahmen (10), einem um eine zweite Achse (X) gegenüber dem Azimutrahmen (10) verdrehbaren Innenrahmen (14) und einem in dem Innenrahmen (14) sitzenden zweiachsigen Kreisel (18), bei welchem die Plattform nach einer Vorausrichtung bei horizontaler Drallachse (22) des Kreisels (18) in eine erste Stellung verdreht wird, in welcher die Summe der an einer Eingangsachse (20) wirksamen Drehgeschwindigkeiten null wird,
**gekennzeichnet durch die Verfahrensschritte:**
(a) Messung des Azimutwinkels in der besagten ersten Stellung,
(b) gleichzeitige Verdrehung des Azimutrahmens (10) und des Innenrahmens (14) um die jeweilige Plattformachse (Y bzw. X) um jeweils $180°$,
(c) Verdrehung der Plattform in eine zweite Stellung, in welcher wiederum die Summe der an der besagten Eingangsachse (20) wirksamen Drehgeschwindigkeiten null wird und
(d) Messung des Azimutwinkels in der besagten zweiten Stellung,
(e) wobei ein die Nordrichtung darstellender Winkel in der Mitte zwischen den Lagen der Drallachse in den beiden Stellungen erhalten wird.

2. Verfahren nach Anspruch 1, **dadurch gekennzeichnet, daß**
(a) zusätzlich durch einen Neigungsmesser (28) die Neigung des Innenrahmens (14) gegen die Horizontale um eine zu der Azimutachse (Y) und der zweiten Achse (X) senkrechte Achse in der ersten und in der zweiten Stellung gemessen wird und die Neigungsmeßwerte gespeichert werden,
(b) durch den Kreisel (18) die Drehgeschwindigkeit um die zweite Eingangsachse (24) in der ersten und in der zweiten Stellung gemessen wird und die Drehgeschwindigkeitsmeßwerte gespeichert werden und
(c) aus den gespeicherten Neigungsmeßwerten und Drehgeschwindigkeitsmeßwerten ein Meßwert gewonnen wird, der die durch die Neigung bedingte Winkelabweichung zwischen der Mitte der beiden Lagen der Drallachse (22) und der Nordrichtung wiedergibt.

3. Verfahren nach Anspruch 2, **gekennzeichnet durch den weiteren Verfahrensschritt:**
(d) Verdrehung der Drallachse (22) nach Maßgabe des besagten Meßwertes derart, daß die Drallachse (22) in die Nordrichtung augerichtet wird.

4. Verfahren nach Anspruch 2, **dadurch gekennzeichnet, daß** der besagte Meßwert für die durch die Neigung bedingte Winkelabweichung

$$\Psi = \frac{\Psi_1 + \Psi_2}{2}$$

bestimmt wird nach der Beziehung

$$\Psi = \text{arc sin } \frac{(\omega_{y2} - \omega_{y1}) \sin \frac{\delta_1 + \delta_2}{2}}{\Omega \cos \varphi}$$

wobei

$\psi_1$ und $\psi_2$ die Azimutwinkel der Drallachse in der ersten und der zweiten Stellung bezogen auf die Nordrichtung sind,

$\omega_{y1}$ und $\omega_{y2}$ die in der ersten und der zweiten Stellung an der zweiten Eingangsachse des Kreisels wirksamen Winkelgeschwindigkeiten sind,

$\delta_1$ und $\delta_2$ die in der ersten und der zweiten Stellung von dem Neigungsmesser (28) gemessenen Neigungen der Plattform sind,

$\Omega$ die Drehgeschwindigkeit der Erde ist und

$\varphi$ die geographische Breite ist.

5 Plattform zur Durchführung des Verfahrens nach Anspruch 1, enthaltend

(a) einen Azimutrahmen (10), der um eine im wesentlichen vertikale Azimutachse (Y) gegenüber einer Basis verdrehbar gelagert ist,

(b) einen Innenrahmen (14), der um eine zur Azimutachse (Y) senkrechte, im wesentlichen waagerechte zweite Achse (X) in dem Azimutrahmen (10) verdrehbar gelagert ist,

(c) einen ersten Stellmotor (12), durch welchen der Azimutrahmen (10) um die Azimutachse (Y) verdrehbar ist,

(d) einen zweiten Stellmotor (16), durch welchen der Innenrahmen (14) um die zweite Achse (X) verdrehbar ist,

(e) einen zweiachsigen Kreisel (18) mit einer Drallachse (22), einer ersten und einer zweiten Eingangsachse (20 bzw. 24), wobei die erste Eingangsachse (20) parallel zu der besagten zweiten Achse (X) der Plattform liegt, die Drallachse (22) senkrecht dazu im wesentlichen waagerecht verläuft und die zweite Eingangsachse (24) senkrecht zu Drallachse (22) und erster Eingangsachse (20) angeordnet ist,

(f) einen Abgriff (34,36) und einen Drehmomenterzeuger (38,40) auf jeder der Eingangsachsen (20,24) des Kreisels (18),

(g) einen ersten Neigungsmesser (26), der auf Neigung des Innenrahmens (14) gegenüber der Horizontalen um die erste Eingangsachse (20) anspricht,

(h) eine Servoelektronik (34,41 ,16;36,42,12), durch welche ein Kreiselgehäuse (32) elektrisch der Drallachse (22) um zwei Achsen nachgeführt wird,

(i) einen ersten Regelkreis (46), dessen Meßfühler der erste Neigungsmesser (26) und dessen Stellglied der um die zweite Eingangsachse (24) wirkende Drehmomenterzeuger (40) ist und durch welchen die Drallachse (22) des Kreisels (18) stets horizontal gehalten wird, und

(j) einen zweiten Regelkreis (44,38) mit einem Regler (44), welcher von einem der Drehgeschwindigkeit um die erste Eingangsachse (20) entsprechenden Signal beaufschlagt ist und durch welchen der um die erste Eingangsachse (20) wirksame Drehmomenterzeuger (38) ansteuerbar ist, derart, daß der Azimutrahmen (10) in eine erste Stellung verdrehbar ist, in welcher die um die erste Eingangsachse (20) wirksame Drehgeschwindigkeit null wird,

**dadurch gekennzeichnet, daß**

(k) eine Steuervorrichtung (54) vorgesehen ist,

(k₁) durch welche die beiden Drehmomenterzeuger (38,40) derart ansteuerbar sind, daß sie eine 180°-Drehung der Drallachse (22) des Kreisels (18) sowohl um die erste Eingangs achse (20) als auch um die zweite Eingangsachse (24) einleiten.

(k₂) durch welche dann die zweite Regelkreis zur erneuten Eindrehung der Drallachse (22) des Kreisels (18) in eine zweite Stellung, ebenfalls mit horizontaler Drallachse (22) ansteuerbar sind, in welcher wiederum die um die erste Eingangsachse (20) des Kreisels (18) wirksame Winkelgeschwindigkeit null wird,

(k₃) wobei die Mitte der Lagen der Drallachse (22) in der ersten und der zweiten Stellung einen die Nordrichtung unbeeinflußt von Kreiseldriften wiedergebenden Azimutwinkel liefert.

6. Plattform nach Anspruch 5, **dadurch gekennzeichnet daß**

(1) ein zweiter Neigungsmesser (28) auf Neigung des Azimutrahmens (10) gegenüber der Horizontalen um eine zu der Azimutachse (Y) und zu der zweiten Achse (X) der Plattform senkrechte Achse anspricht, und

(m) durch die Steuervorrichtung (48) in der ersten und der zweiten Stellung die Speicherung der Neigungsmeßwerte des zweiten Neigungsmessers (28) in dem Speicher (46) einleitbar ist,

(n) der Kreisel (18) ein die Drehgeschwindigkeit um die zweite Eingangsachse (24) wiedergebenden Drehgeschwindigkeitsmeßwert liefert,

(o) durch die Steuervorrichtung (48) in der ersten und der zweiten Stellung die Speicherung dieser Drehgeschwindigkeitsmeßwerte in dem Speicher (46) einleitbar ist,

(p) die gespeicherten Meßwerte auf Signalverarbeitungsmittel (56) aufschaltbar sind und diese Signalverarbeitungsmittel (56) zur Bildung eines Ausgangssignals eingerichtet sind, das die neigungsbedingte Winkelabweichung der Mitte zwischen den beiden Lagen der Drallachse (22) von der Nordrichtung wiedergibt.

*Fig.1*

*Fig. 2*

*Fig.3*

*Fig. 4*

Fig. 5

Fig.6

Fig.7

Fig. 8

Fig.9

EP 0 335 116 A2

Fig.10